# EUROPEAN PATENT APPLICATION

(11) **EP 4 714 754 A1**
(43) Date of publication of application: **25.03.2026**
(21) Application number: 24201448.8
(22) Date of filing: 19.09.2024
(51) Int. Cl.: B60R 16/037, B60R 25/24, B60R 25/20

(54) **METHOD FOR PREPARING A VEHICLE FOR START UP, METHOD FOR STARTING UP A VEHICLE, DATA PROCESSING APPARATUS FOR CARRYING OUT THE METHODS, SYSTEM, COMPUTER PROGRAM, COMPUTERREADABLE STORAGE MEDIUM, AND VEHICLE**

(71) Applicant: Volvo Car Corporation, 405 31 Göteborg (SE)
(72) Inventor: SÄRNSTRAND, Emil, 40531 Göteborg (SE)
(74) Representative: Maiwald GmbH

(57) **Abstract**

The disclosure relates to a method for preparing a vehicle (140) for start up. The method comprises obtaining first data (D1) indicative of a sequence of locations (110) of a vehicle user (100). The method further comprising determining, based on the first data (D1), whether the vehicle user (100) intends to use the vehicle (140). The method still further comprising providing second data (D2) indicative of a start up instruction for the vehicle (140) based on a result of the determining. Furthermore, a method for starting up a vehicle, a data processing apparatus, a system, a computer program and a computer-readable storage medium are presented. Additionally, a vehicle is described.

## Description

### TECHNICAL FIELD

The present disclosure relates to a method for preparing a vehicle for start up.

The present disclosure also relates to a method for starting up a vehicle.

Further, the present disclosure relates to a data processing apparatus comprising means for carrying out the method for preparing a vehicle for start up and/or for carrying out the method for starting up a vehicle, and to a system comprising such data processing apparatus.

Still further, the present disclosure also relates to a computer program and to a computer-readable storage medium enabling to carry out such methods.

Additionally, the present disclosure is directed to a vehicle.

### BACKGROUND ART

Modern technologies allow a vehicle user to access and operate a vehicle without manually unlocking the vehicle. In case the vehicle user carries a device, like, for example, a smart key, which allows the vehicle to identify the vehicle user in close proximity of the vehicle, the vehicle doors may unlock automatically. It goes without saying that in the technical field of vehicle user identification, there is room for improvement, for example regarding vehicle user convenience.

### SUMMARY

Therefore, it is an objective of the present disclosure to further improve the preparation of a vehicle for start up. The improvement shall in particular enhance vehicle user convenience.

The problem is at least partially solved or alleviated by the subject matter of the independent claims of the present disclosure, wherein further examples are incorporated in the dependent claims.

According to a first aspect, there is provided a method for preparing a vehicle for start up. The method comprises obtaining first data indicative of a sequence of locations of a vehicle user. The method further comprises determining, based on the first data, whether the vehicle user intends to use the vehicle. Thus, if the determination is negative, i.e. if it is determined that the vehicle user does not intend to use the vehicle, the method ends and/or returns to the obtaining of the first data. If the determination is positive, i.e. if it is determined that the vehicle user intends to use the vehicle, second data indicative of a start up instruction are provided. I.e., the method still further comprises providing the second data indicative of a start up instruction for the vehicle based on a result of the determining.

In the context of the present disclosure, the first data indicative of a sequence of locations of the vehicle user is understood as a dataset that comprises a plurality of data items indicative of a location of the user, wherein these data items have a defined order, i.e. the dataset is also indicative of an order of the data items indicative of a location of the user. In an example, the order of the data items may be defined by a time information associated with each of the locations of the user. Furthermore, providing second data is understood in that the second data is rendered available. In an example, the second data may be pushed to the relevant system. In another example, the second data is rendered available for being pulled by the relevant system. Moreover, when executing the present method, i.e. when determining the vehicle user's intention based on the vehicle user's sequence of locations, the user may be located at a distance from the vehicle. Additionally or alternatively, the vehicle may for example be out of sight of the vehicle user. Thus, the vehicle user and the vehicle may be at different locations, e.g. the vehicle user and the vehicle may be in different buildings. For example, the vehicle user may be at his home or at his work, wherein the vehicle may be parked in a garage or in a car park. Determining the vehicle user's intention to use the vehicle may be understood in that, based on the vehicle user's sequence of locations, the vehicle user is expected to go to his or her vehicle and to use the vehicle. Hence, the vehicle may be prepared for start up already before the vehicle is within sight of the vehicle user and/or before the user is at the location of the vehicle. For example, in case the vehicle user's sequence of locations may indicate that the vehicle user leaves his workplace and approaches the vehicle parked at a car park, preparing the vehicle for start up may already be started when the vehicle user is leaving the workplace. Hence, the start up of the vehicle may be initiated or triggered comparatively early, particularly in comparison to known solutions. Therefore, there may be more time available for preparing the vehicle for start up. Thus, comparatively complex or time-consuming preparations may be performed without impacting vehicle user convenience, e.g. without causing waiting time for the vehicle user. Hence, the likelihood is increased that the vehicle user, when arriving at the vehicle prepared for start up, may simply enter the vehicle and drive off. This enhances user comfort. It is noted that in a case in which determining whether the vehicle user intends to use the vehicle results in determining that the user does not intend to use the vehicle, the method may be abandoned. Optionally, the method may be started again after a predefined waiting time.

In an example, the first data indicative of a sequence of locations of the vehicle user may be obtained from an endpoint terminal such as a mobile electronic device carried by the vehicle user. Such a mobile electronic device may also be designated as User equipment. The mobile electronic device may be a smart phone, smart watch, fitness tracker or any other suitable device that may be carried by the vehicle user and that is able to provide first data indicative of a sequence of locations or that is able to provide repeatedly data indicative of a location.

The method according to the first aspect of the present disclosure may be executed on a remote server, e.g. on a cloud server. Alternatively, the method according to the first aspect of the present disclosure may be executed on a data processing device located in the vehicle. In case the first data is obtained from an endpoint terminal, the data processing device and/or the sever is communicatively coupled to the endpoint terminal.

According to an example, the determining may comprise comparing the first data to first comparison data indicative of a historic and/or predefined sequence of locations of the vehicle user.

The historic sequence of locations of the vehicle user may comprise, for example, one or more locations, which the vehicle user has visited at least once in the past, for example a gym, a home and/or a workplace, and from which the user has started to use the vehicle. Hence, for example, the first comparison data may be indicative of the vehicle user arriving at the gym, staying at the gym, and leaving the gym to use the vehicle. Thus, the comparing may comprise that the obtained sequence of locations of the vehicle user derivable from the first data is compared to such a historic sequence of locations of the vehicle user, i.e. to the vehicle user arriving at the gym, staying at the gym, and leaving the gym to use the vehicle. The same applies for the examples when the user starts from a home or a workplace in order to use the vehicle. Comparing the first data to the first comparison data enhances the precision of the determination whether the vehicle user intends to use the vehicle. Altogether, user comfort is further enhanced.

The predefined sequence of locations of the vehicle user may comprise, for example, a sequence of locations associated with the vehicle user leaving a predetermined location, like the vehicle user's home location, to use the vehicle. In this context, the user may have explicitly provided one or more predetermined location as input data to the method of the present disclosure. Examples of such predetermined locations are a home location, a work location, and one or more frequently visited leisure time locations such as a tennis club. Alternatively, the method may automatically set these predetermined locations by statistically analyzing user data. In this context, the home location may for example be set as the location where the user usually stays at night. The work location may be set as the location where the user usually stays during the day if the day is a working day. Hence, the first comparison data may be indicative of the vehicle user being at home and leaving the home to use the car. Thus, the comparing may comprise that the obtained sequence of locations of the vehicle user derivable from the first data is compared to such predetermined sequence of locations of the vehicle user, e.g. to the vehicle user being at his home and leaving his home to use the vehicle. In doing so, the precision of the determination whether the vehicle user intends to use the vehicle is improved. Altogether, user comfort is further enhanced.

According to an example, the comparing of the first data to the first comparison data may comprise determining a degree of similarity of the first data and the first comparison data.

The determining of the degree of similarity may comprise that it is compared, whether the obtained sequence of locations of the vehicle user derivable from the first data is similar to a certain degree to a sequence of locations derivable from the first comparison data. Moreover, a time aspect may be considered. This means that the determination of the degree of similarity only considers comparison data relating to a similar time, e.g. time at day, day of week, etc. are considered. The certain extend may be quantified by one or more predetermined threshold values. For example, whether a location or sequence of locations derivable from the first data differs by more than a certain number of meters from a location or sequence of locations derivable from the first comparison data. Additionally or alternatively, statistical similarity indicators may be used. Thus, the degree of similarity could consider a probability e.g. be based on how many times being at one place has led to starting the vehicle. Additionally, a time at day, a day of the week, an event calendar, e.g. a big sports event happening at a stadium, etc. may be considered. Also, a phone call history may be statistically evaluated. Hence, if similarity is affirmed, i.e. confirmed to a certain degree, it may be determined that the vehicle user intends to use the vehicle, whereas if similarity is not affirmed, i.e. similarity is low, it may be determined that the vehicle user does not intend to use the vehicle. Altogether, determining whether the vehicle user intends to use the vehicle may be done with high reliability. The similarity may for example be expressed as a percentage or as a similarity score.

According to an example, the determining may comprise obtaining, e.g. deriving, third data indicative of an activity of the vehicle user based on the first comparison data, wherein determining whether the vehicle user intends to use the vehicle is further based on the third data.

Considering the third data further enhances the precision of the determination whether the vehicle user intends to use the vehicle. In an example, the third data may be indicative of the user running or cycling. In a case in which the user is cycling towards the vehicle, it may be determined that the user does not intend to use the vehicle, whereas in a case in which the user is running towards the vehicle, it may be determined that the user intends to use the vehicle.

According to an example, the determining may comprise obtaining, e.g. deriving, third data indicative of an activity of the vehicle user based on the first data, wherein determining whether the vehicle user intends to use the vehicle is further based on the third data. Alternatively or additionally, the determining may comprise obtaining, e.g. receiving, third data indicative of an activity of the vehicle user, wherein determining whether the vehicle user intends to use the vehicle is further based on the third data.

Considering the third data further enhances the precision of the determination whether the vehicle user intends to use the vehicle. In an example, the third data may be indicative of the user running or cycling. In a case in which the user is cycling towards the vehicle, one may determine that the user does not intend to use the vehicle, whereas in a case in which the user is running towards the vehicle, one may determine that the user intends to use the vehicle.

The third data may be obtained, e.g. received, from an endpoint terminal carried by the vehicle user. The endpoint terminal may be formed by a mobile electronic device. The mobile electronic device may be a smart phone, smart watch, fitness tracker or any other suitable device that may be carried by the vehicle user and that is capable and/or configured to provide third data indicative of an activity of the vehicle user.

According to an example, the activity may be associated with at least one of a time information, a date information, an indication whether the vehicle user is moving, an indication of a direction in which the vehicle user is moving, and an information indicative of at least one movement pattern related to the vehicle user. Thus, the reliability of the determination whether the user intends to use the vehicle is further enhanced.

For example, a historic sequence of locations of the vehicle user may comprise, for example, a location, which the vehicle user has visited at least once in the past at a certain time or date, for example a gym, and from which the user has approached and used the vehicle at a certain time. Hence, for example, the first comparison data may be understood to be associated with time-related information, in that the vehicle user arrives at the gym at a certain time or date, stays at the gym for a certain period of time, and leaves the gym at a certain time to use the vehicle. Thus, the comparing may comprise that the obtained sequence of locations of the vehicle user derivable from the first data is compared to such historic sequence of locations of the vehicle user, where also the time or timing aspect is considered, i.e. under further consideration of time-related information.

Moreover, in another example, a predefined sequence of locations of the vehicle user may comprise, for example, the vehicle user leaving a predetermined location, like the vehicle user's home location for example, at a certain time or date to use the vehicle. Hence, for example the first comparison data may be understood to be associated with time-related information, in that the vehicle user is at home at a certain time or date and leaves the home at a certain time or date to use the vehicle. Thus, the comparing may comprise that the obtained sequence of locations of the vehicle user derivable from the first data is compared to such predetermined sequence of locations of the vehicle user, i.e. under further consideration of time-related information.

In a further example, the determining of the degree of similarity may be understood to further comprise compared comparison, for example, whether a time or time period associated with a location or sequence of locations as derivable from the first data differs by more than a certain time value from a time or time period associated with a location or sequence of locations derivable from the first comparison data.

In another example, in case the vehicle user may leave a certain location, like his home location or his work location, at a certain time and/or in a certain direction, for example at a time where the vehicle user normally leaves his home location or his work location to use the vehicle or in a direction toward a garage or a car parking, the vehicle user's intention to use the vehicle may be determined with higher reliability. Hence, movement patterns related to the vehicle user may be used to increase such reliability even more, in that a certain behavior of the vehicle user, which may lead to the vehicle user using the vehicle, may be considered, for example for such comparing and similarity determination as outlined above.

According to an example, the method may further comprise extending the first data and determining, based on the extended first data, whether the vehicle user intends to use the vehicle.

In this context, extending the first data means artificially adding data items to the sequence of locations, wherein the added data items may be associated with a future time when considering the non-extended first data. Therefore, the added data items may as well be called a prediction, i.e. extending the first data means adding a predicted data items to the data items of the first data. Extending the first data may for example be achieved by extrapolating, i.e. the obtained sequence of locations of the vehicle user may be extrapolated by use of an extrapolation method to anticipate or predict the vehicle user's location in a future, like e.g. in a number of seconds, a number of minutes and/or a number of hours. Additionally or alternatively, the first data may be extended using artificial intelligence and/or machine learning. In this context, a data model may be used which may be trained using real user behavior. Based thereon, the data model is configured to provide a probable extension of the first data when the first data is fed into the data model as input data. Such approach may allow to increase a reliability of determining the vehicle user's intention to use the vehicle even further.

According to an example, the locations comprised by the sequence of locations may be associated with at least one of a GPS (Global Positioning System) information, a network-based location information related to a network which an endpoint terminal of the vehicle user is associated with, and an information indicative of at least one location preset by the vehicle user. In this context, the user may have explicitly provided one or more predetermined location as input data to the method of the present disclosure. Examples of such predetermined locations are a home location, a work location, and one or more frequently visited leisure time locations such as a tennis club. Alternatively, the method may automatically set these predetermined locations by statistically analyzing user data. In this context, the home location may for example be set as the location where the user usually stays at night. The work location may be set as the location where the user usually stays during the day if the day is a working day.

Such approach may allow to obtain a vehicle user's sequence of locations in different ways and in different granularities, as appropriate.

According to an example, the start up instruction may be indicative of at least one of starting up a data processing device of the vehicle, starting up the thermal management system of an energy storage of the vehicle, and adjusting at least one vehicle component in the cabin of the vehicle.

The energy storage of the vehicle may comprise one or more battery modules or one or more battery packs. The at least one vehicle component may be a seat, a steering means, one or more mirrors, a music player or infotainment system and/or one or more interior lights. Thus, one or more of these vehicle components may be adjusted to the user intending to use the vehicle. Altogether, the vehicle is ready for use once the vehicle user arrives at the vehicle. Put otherwise, the vehicle user does not have to wait until the vehicle can be effectively used.

According to an example, the method may further comprise obtaining fourth data indicative of a location of the vehicle; and determining whether the vehicle user intends to use the vehicle, wherein determining whether the vehicle user intends to use the vehicle is further based on the fourth data. In this context, the fourth data may be associated with an indicator whether the vehicle user is likely to use the vehicle if the vehicle is located at a location indicated by the fourth data. In an example, the fourth data may indicate a location of a workshop. Thus, based on the fourth data, in this example indicating that the vehicle is at a workshop, the likelihood that the vehicle user intends to use the vehicle may be comparatively low. In another example, the fourth data may indicate that the vehicle is parked at the side of a street. In this case, the likelihood that the user intends to use the vehicle is comparatively high.

According to an example, the method may further comprise determining, based on the first data and the fourth data, a distance between the vehicle user and the vehicle and a direction of movement of the vehicle user with respect to the vehicle; and determining whether the vehicle user intends to use the vehicle further based on the distance and/or the direction of movement.

Hence, for example, if a distance between the vehicle user and the vehicle decreases and reaches a predetermined distance threshold value, e.g. a lower distance threshold, it may be determined that the vehicle user intends to use the vehicle. If such predetermined distance threshold value is not reached, it may be determined that the vehicle user does not intend to use the vehicle. Additionally or optionally, for example, if the distance between the vehicle user and the vehicle decreases by at least a predetermined threshold decrease rate, i.e. by at least a predetermined distance within a predetermined time period, it may be determined that the vehicle user intends to use the vehicle. If such predetermined threshold decrease rate is not reached, it may be determined that the vehicle user does not intend to use the vehicle. In a case in which the user is determined to move away from the vehicle, it may be determined that the user does not intend to use the vehicle.

For example, in case the vehicle is parked at a road nearby the vehicle user's home location and the vehicle user walks towards to the garage, the vehicle user may not have the intention to use the vehicle. Such approach may allow to increase a reliability of determining the vehicle user's intention to use the vehicle even further.

According to a second aspect, there is provided a method for starting up a vehicle. The method comprises obtaining second data indicative of a start up instruction for the vehicle. The method further comprises starting up the vehicle based on the second data, wherein the starting up comprises at least one of starting up a data processing device of the vehicle, starting up a thermal management system of an energy storage of the vehicle, and adjusting at least one vehicle component in the cabin of the vehicle. The second data may be provided by executing the method according to the first aspect of the present disclosure.

Hence, the method according to the second aspect of the present disclosure enables that start up of the vehicle may be initiated or triggered comparatively early, particularly in comparison to known solutions. Therefore, there may be more time available for preparing the vehicle for start up. Thus, comparatively complex or time-consuming preparations may be performed without impacting vehicle user convenience, e.g. without causing waiting time for the vehicle user. Hence, a likelihood is increased that a vehicle user, when arriving at the vehicle being started up, may simply enter the vehicle and drive off. Altogether, user comfort is enhanced.

As has been mentioned before, the energy storage of the vehicle may comprise one or more battery modules or one or more battery packs.

In an example, the method according to the second aspect is executed on a data processing device, herein also referred to as a second data processing apparatus, that is located in the vehicle and that is communicatively coupled to a data processing device on which the method according to the first aspect is executed, herein also referred to as a first data processing apparatus.

The method according to the first aspect and/or the method according to the second aspect may be at least partly computer-implemented, and may be implemented in software or in hardware, or in software and hardware. Moreover, the method according to the first aspect of the present disclosure may be performed by a data processing device, herein also referred to as first data processing apparatus. Similarly, the method according to the second aspect of the present disclosure may be performed by a data processing device, herein also referred to as a second data processing apparatus. According to examples, such data processing devices may be, but not limited to, a (Vehicle) Core Computer, (V)CC, a Vehicle Control Unit, VCU, one or more Application Specific Integrated Circuit(s), ASIC(s) or any similar centralized or distributed data processing device(s) of a vehicle capable of executing computer program code comprising instructions. Further, the method according to the first aspect and/or the second aspect may be carried out by computer program instructions running on means that provide data processing functions. The data processing means may be a suitable computing means as mentioned above. The data processing means or the computer, respectively, may comprise one or more of a processor, a memory, a data interface, or the like. According to yet other examples, the skilled person will also appreciate that at least some parts of the data processing capabilities of a vehicle may be implemented as a functionality at, or of, a remote server, for example as a functionality implemented in a cloud or edge cloud architecture, to which the vehicle internal data processing system, for example the core computer, of the vehicle is communicatively connected. For such implementations, information needs to be communicated, hence transmitted or broadcasted, between the vehicle internal data processing system and the remote server. For the sake of simplicity, the system providing data processing capabilities will herein generally be referred to as data processing device or data processing apparatus.

According to a third aspect, there is provided a data processing apparatus comprising means for carrying out the method of the first aspect and/or for carrying out the method of the second aspect.

Hence, by such data processing apparatus, a likelihood is increased that a vehicle user, when arriving at the vehicle being started up, may simply enter the vehicle and drive off. Thus, user comfort is enhanced.

According to a fourth aspect, there is provided a system, comprising a first data processing apparatus according to the third aspect, wherein the first data processing apparatus comprises means for carrying out the method of the first aspect.. Moreover, the system comprises a second data processing apparatus according to the third aspect, wherein the second data processing apparatus comprises means for carrying out the method of the second aspect, and wherein the first data processing apparatus and the second data processing apparatus are communicatively coupled.

It is noted that the above-mentioned data processing apparatuses according to the third aspect are designated as 'first' and 'second' for the ease of explanation only. The terms 'first' and 'second' do not imply any number of data processing apparatuses. Hence, by such system, the likelihood is increased that a vehicle user, when arriving at the vehicle being started up, may simply enter the vehicle and drive off. Additionally, user comfort is enhanced.

According to a fifth aspect, there is provided a computer program comprising instructions which, when the computer program is executed by a data processing apparatus or computer, cause the data processing apparatus or computer to carry out the method of the first aspect and/or to carry out the method of the second aspect.

Hence, by such computer program, a likelihood is increased that a vehicle user, when arriving at the vehicle being started up, may simply enter the vehicle and drive off. Additionally, user comfort is enhanced.

According to a sixth aspect, there is provided a computer-readable storage medium comprising instructions which, when executed by a data processing apparatus or computer, cause the data processing apparatus or computer to carry out the method of the first aspect and/or to carry out the method of the second aspect.

Hence, by such computer-readable storage medium, a likelihood is increased that a vehicle user, when arriving at the vehicle being started up, may simply enter the vehicle and drive off. Additionally, user comfort is enhanced.

According to a seventh aspect, there is provided a vehicle comprising a data processing apparatus according to the third aspect. Hence, such a vehicle offers the user comfort that a vehicle user, when arriving at the vehicle being started up, may simply enter the vehicle and drive off.

It should be noted that the above examples may be combined with each other irrespective of the aspect involved. Accordingly, the method according to the first aspect and/or the second aspect may be combined with structural features and, likewise, the apparatus and the system may be combined with features described above with regard to the method according to the first aspect and/or the second aspect.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows an example system according to the present disclosure;
- Figure 2: shows a flowchart illustrating a method according to the present disclosure for preparing a vehicle for start up; and
- Figure 3: shows a flowchart illustrating a method according to the present disclosure for starting up a vehicle.

### DETAILED DESCRIPTION

The Figures are merely schematic representations and serve only to illustrate examples of the disclosure. Identical or equivalent elements are in principle provided with the same reference signs.

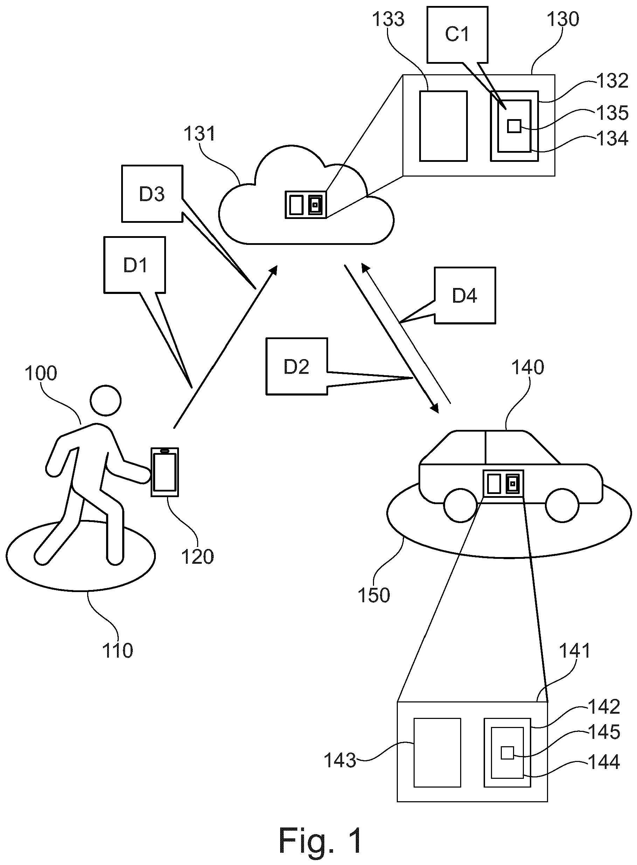

Figure 1 shows a vehicle user 100, a data processing apparatus 130 and a vehicle 140.

The vehicle user 100 is at a certain location 110 and carries an endpoint terminal 120, e.g. a smart phone. The vehicle user 100 may be in motion, i.e. the location 110 of the vehicle user 100 may change, or the vehicle user 100 may not be in motion, i.e. the location 110 of the vehicle user 100 may not change.

The endpoint terminal 120 is configured to provide first data D1 indicative of a sequence of locations of the vehicle user 100.

In this example, the location 110 is associated with at least one of a GPS information, a network-based location information related to a network which an endpoint terminal 120 of the vehicle user 100 is associated with, and an information indicative of at least one location preset by the vehicle user 100.

The data processing apparatus 130 may be implemented as part of a remote server 131, for example implemented as part of a cloud-based server. The data processing apparatus 130 comprises a data storage unit 132 and a data processing unit 133.

The data storage unit 132 comprises a computer-readable storage medium 134.

On the computer-readable storage medium 134, there is provided a computer program 135.

The computer program 135 and, thus, also the computer-readable storage medium 134, comprise instructions which, when executed by the data processing unit 133, or, more generally speaking, a computer, cause the computer or the data processing unit 133 to carry out a method for preparing a vehicle for start up.

Consequently, the data storage unit 132 and the data processing unit 133 form means for providing method for preparing a vehicle for start up.

Even though not shown, the data processing apparatus 130 may also be located in the vehicle 140, for example in connection to, or co-located with, the data processing apparatus 141.

The vehicle 140 is at a certain location 150 and comprises a data processing apparatus 141. The location 150 may represent a garage corresponding to a home location of the vehicle user 100, a car parking corresponding to a work location of the vehicle user 100, or, in general, any location where the vehicle 140 may be parked.

The data processing apparatus 141 of the vehicle 140 comprises a data storage unit 142 and a data processing unit 143.

The data storage unit 142 comprises a computer-readable storage medium 144.

On the computer-readable storage medium 144, there is provided a computer program 145.

The computer program 145 and, thus, also the computer-readable storage medium 144, comprise instructions which, when executed by the data processing unit 143, or, more generally speaking, a computer, cause the computer or the data processing unit 143 to carry out a method for starting up the vehicle 140.

Consequently, the data storage unit 142 and the data processing unit 143 form means for carrying out the method for starting up the vehicle 140.

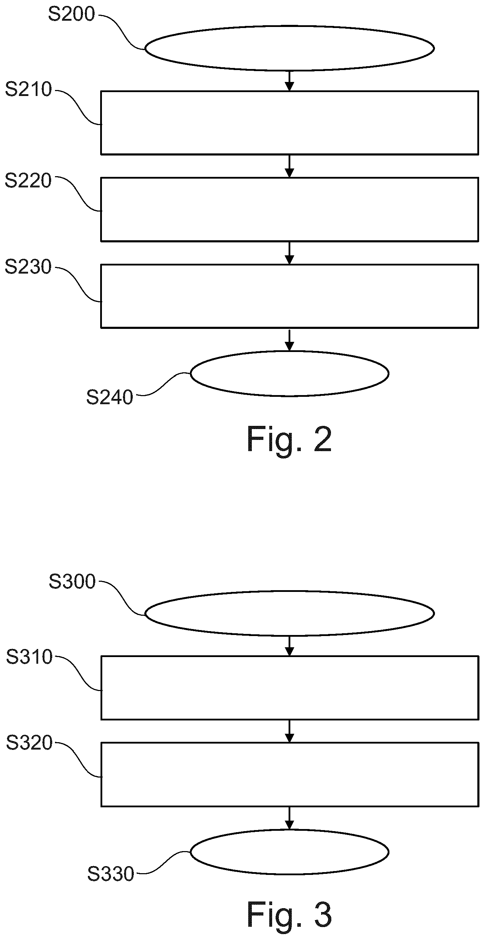

In the following, the method for preparing the vehicle 140 for start up will be explained in more detail (see also Figure 2).

The method starts at S200.

In Step S210, first data D1 indicative of a sequence of locations 110 of the vehicle user 100 is obtained.

In more detail, the data processing apparatus 130 associated with the cloud server 131 obtains first data D1 from the endpoint terminal 120 of the vehicle user 100, as indicated in Figure 1 by the arrow pointing from the endpoint terminal 120 to the data processing apparatus 130. The first data D1 is indicative of a sequence of locations 110 of the vehicle user 100. The sequence of locations 110 may indicate that the vehicle user 100 is in motion, i.e. the location 110 of the vehicle user changes over time, or may indicate that the vehicle user 100 is not in motion, i.e. the location 110 may remain substantially the same over time. Substantially the same may be understood in that the vehicle user 100 remains within a defined area around the location 110, for example the vehicle user 100 may remain at his home location, which implies that the vehicle user 100 remains within a defined area around a location indicating a center location of the vehicle user's 100 home location.

In a subsequent step S220, the method determines, based on the first data D1, whether the vehicle user 100 intends to use the vehicle 140.

In more detail, the data processing apparatus 130 determines, based on the first data D1, whether the vehicle user 100 intends to use the vehicle 140.

In the present example, the step S220 comprises several sub-steps.

First, the first data D1 is extended. In the present example, the first data D1 is extrapolated. This means that the first data D1 is artificially rolled forward such that, the extrapolated portion represents an expected future state of the first data D1, i.e. the sequence of locations 110. As will be explained in more detail further below, the determining whether the vehicle user 100 intends to use the vehicle 140 may then be based on the extrapolated first data D1.

Furthermore, the first data D1, more precisely the extrapolated first data D1, is compared to first comparison data C1. The first comparison data C1 is indicative of a historic and/or predefined sequence of locations 110 of the vehicle user 100.

This means that the first comparison data C1 describes sequences of the location 110 dating from a past time and/or sequences of the location 110 that have been predefined or set. In the latter case, sequences of locations extending between any two locations that are frequently visited by the user 100 may be set, e.g. from a home place to a workplace or from a workplace to a gym, etc.

Based on this, a degree of similarity of the first data D1 and the first comparison data C1 is determined. This means that it is determined to which degree the first data D1, in the present example the extrapolated first data D1, is similar to a historic and/or predefined sequence of location 110. In an illustrative example, this allows to determine whether the user is leaving an office building at the front side in order to go to a restaurant or at the back side in order to go to the parking space.

Moreover, the step S220 comprises obtaining third data D3 indicative of an activity of the vehicle user 100. In the present example, the third data D3 is provided by the endpoint terminal 120.

It is understood that in another example, it is also possible that the third data D3 is determined based on the first data D1 and/or the first comparison data C1.

The activity indicated by the third data D3is associated with at least one of a time information, a date information, an indication whether the vehicle user 100 is moving, an indication of a direction in which the vehicle user 100 is moving, and an information indicative of at least one movement pattern related to the vehicle user 100.

Thus, determining whether the vehicle user 100 intends to use the vehicle 140 is further based on the third data D3.

Moreover, the step S220 comprises obtaining fourth data D4 indicative of a location 150 of the vehicle 140. In the present example, the fourth data D4 is provided by the vehicle 140, more precisely by the data processing apparatus 141.

Consequently, determining whether the vehicle user 100 intends to use the vehicle 140 is further based on the fourth data D4.

In more detail, based on the first data D1 and the fourth data D4, a distance between the vehicle user 100 and the vehicle 140 and a direction of movement of the vehicle user 100 with respect to the vehicle 140 may be determined.

Thus, determining whether the vehicle user 100 intends to use the vehicle 140 is further based on the distance and/or the direction of movement. This means that the user is determined to intend to use the vehicle if the user 100 is found to approach the vehicle, i.e. the direction of movement is oriented towards the vehicle 140, and if the distance between the user 100 and the vehicle 140 is lower than a predefined distance threshold.

Based on a result of the determining, the data processing apparatus 130 provides second data D2 indicative of a start up instruction for the vehicle 140. This happens in step S230. Hence, if the determining is positive, the second data D2 are provided, whereas if the determining is negative, the second data D2 are not provided. In Figure 1, the second data D2 are provided to the vehicle 140, in more detail to the data processing apparatus 141 of the vehicle 140, as indicated by the arrow pointing from the data processing apparatus 130 to the vehicle 140.

In the present example, the start up instruction is indicative of at least one of starting up a data processing device of the vehicle 140, starting up a thermal management system of an energy storage of the vehicle 140, and adjusting at least one vehicle component in the cabin of the vehicle.

The method for preparing a vehicle 140 for start up ends in 240.

It is understood that the method for preparing a vehicle 140 for start up may be re-started by returning to S200, or by returning to Step S210 for repeating the operation of obtaining first data D1.

In the following, the method for starting up a vehicle 140 will be described in more detail (see also Figure 3).

This method starts in S300.

In Step S310, the method comprises obtaining second data D2 indicative of a start up instruction for the vehicle.

In the present example, the second data D2 is provided by executing the method for preparing a vehicle 140 for start up, i.e. by the data processing apparatus 130.

The vehicle 140, in more detail the data processing apparatus 141 of the vehicle 140, obtains the second data D2 indicative of the start up instruction for the vehicle 140.

Subsequently, in Step S320, the vehicle 140 is started up based on the second data D2.

In more detail, the data processing apparatus 141 of the vehicle 140 starts up the vehicle 140 based on the second data D2. The starting up comprises at least one of starting up a data processing device of the vehicle 140, which may be understood as starting up a core computer of the vehicle 140, starting up a thermal management system of an energy storage of the vehicle 140, and adjusting at least one vehicle component in the cabin of the vehicle, for example a preferred seating position of the vehicle user 100.

The method for starting up a vehicle 140 ends in 330.

It is understood that the method for starting up a vehicle 140 may be re-started by returning to S300, or by returning to Step S310 for repeating the operation of obtaining second data D2.

With further reference to Figure 1, according to an example of the present disclosure, it shall be noted that the vehicle user 100 may allow a tracking of location information or GPS information related to the vehicle user 100, by allowing a tracking of location information or GPS information of the endpoint terminal 120 of the vehicle user 100. The location information comprises the location 110 of the vehicle user 100 and the sequence of locations 110 of the vehicle user 100. Such tracking may be performed by an application running at the endpoint terminal 120. Further, such tracked information may be shared with a data processing application, which may represent the data processing apparatus 130, running on the remote server 131. The data processing application may obtain a better understanding regarding whether the vehicle user 100 intends to reach the vehicle 140. The better understanding may be obtained based on the location 110 of the vehicle user 100 and, optionally, on an activity of the vehicle user 100. Hence, the improved understanding may comprise obtaining whether the vehicle user 100 moves in a certain direction, for example in a direction toward the vehicle 140 in case the vehicle location 150 is known by the data processing application, to obtain a daily behavior of the vehicle user 100, and/or to obtain a certain location of the vehicle user 100, for example a home location of the vehicle user 100 or a work location of the vehicle user 100. It may be considered by the data processing application, for example, whether the vehicle user 100 may leave an office location or work location toward a car parking associated with the work location, whether the vehicle user 100 may quit from the work location at around a same time to use the vehicle to drive home for example, and/or whether the vehicle user 100 may have a weekly habit associated with using the vehicle for arriving at a certain location or for leaving such certain location.

Accordingly, based on determining the vehicle user's 100 intention, the data processing application may instruct the vehicle 140 to prepare for a start up.

The vehicle 140, in more detail the data processing apparatus 141 of the vehicle 140, may use this instruction to perform the vehicle start up. Hence, the vehicle 140 may prepare for a quicker and more comfortable take off. Thus, the vehicle 140 may start to prepare for the arrival of the vehicle user 100 before the vehicle user 100 actually arrives at the vehicle 140.

The vehicle user 140 may also provide, for example via the endpoint terminal 120, personal settings to the data processing application, to adjust a start up of the vehicle 140 according to the vehicle user's preferences and/or behavior. Hence, the vehicle 140 could be prepared for a welcoming experience according to the preferences of the vehicle user 100, comprising for example automated climate settings, a faster take-off time, prepared seats, adjusted music/infotainment and/or adjusted interior lights among others.

It shall be noted that the data processing apparatus 130 as shown according to Figure 1 may be arranged in the vehicle 140 as shown according to Figure 1. Moreover, the data processing apparatus 141 of the vehicle 140 as shown according to Figure 1 may further function as, be part of or co-located with, the data processing apparatus 130 as shown in Figure 1. Hence, the method as outlined in Figure 2 and the method as outlined in Figure 3 may both be executed at the vehicle 140, either by different data processing apparatuses or by a same data processing apparatus.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: vehicle user
- 110: vehicle user location
- 120: endpoint terminal
- 130: data processing apparatus
- 131: remote server
- 132: data storage unit
- 133: data processing unit
- 134: computer-readable storage medium
- 135: computer program
- 140: vehicle
- 141: data processing apparatus of the vehicle
- 142: data storage unit
- 143: data processing unit
- 144: computer-readable storage medium
- 145: computer program
- 150: vehicle location

- D1: first data
- D2: second data
- D3: third data
- D4: fourth data
- C1: first comparison data

## Claims

1. A method for preparing a vehicle (140) for start up, comprising:
• Obtaining (S210) first data (D1) indicative of a sequence of locations (110) of a vehicle user (100);
• Determining (S220), based on the first data (D1), whether the vehicle user (100) intends to use the vehicle (140); and
• Providing (S230) second data (D2) indicative of a start up instruction for the vehicle (140) based on a result of the determining.

2. The method according to claim 1, wherein the determining comprises:
comparing the first data (D1) to first comparison data (C1) indicative of a historic and/or predefined sequence of locations (110) of the vehicle user (100).

3. The method of claim 2, wherein comparing the first data (D1) to the first comparison data (C1) comprises determining a degree of similarity of the first data (D1) and the first comparison data (C1).

4. The method according to claim 2 or 3, wherein the determining comprises:
obtaining third data (D3) indicative of an activity of the vehicle user (100) based on the first comparison data (C1),
wherein determining whether the vehicle user (100) intends to use the vehicle (140) is further based on the third data (D3).

5. The method according to any one of the preceding claims, wherein the determining comprises:
obtaining third data (D3) indicative of an activity of the vehicle user (100) based on the first data (D1),
wherein determining whether the vehicle user (100) intends to use the vehicle (140) is further based on the third data (D3),
and/or
obtaining third data (D3) indicative of an activity of the vehicle user (100), wherein
determining whether the vehicle user (100) intends to use the vehicle (140) is further based on the third data (D3).

6. The method of any one of the preceding claims, further comprising extending the first data (D1) and determining, based on the extended first data, whether the vehicle user (100) intends to use the vehicle (140).

7. The method according to any of the preceding claims, wherein the start up instruction is indicative of at least one of: starting up a data processing device of the vehicle (140), starting up a thermal management system of an energy storage of the vehicle (140), and adjusting at least one vehicle component in the cabin of the vehicle.

8. The method according to any of the preceding claims, further comprising:
obtaining fourth data (D4) indicative of a location (150) of the vehicle (140); and
determining whether the vehicle user (100) intends to use the vehicle (140), wherein
determining whether the vehicle user (100) intends to use the vehicle is further based on the fourth data (D4).

9. The method of claim 8, further comprising determining, based on the first data (D1) and the fourth data (D4), a distance between the vehicle user (100) and the vehicle (140) and a direction of movement of the vehicle user (100) with respect to the vehicle (140); and determining whether the vehicle user (100) intends to use the vehicle (140) further based on the distance and/or the direction of movement.

10. A method for starting up a vehicle (140), comprising:
• Obtaining (S310) second data (D2) indicative of a start up instruction for the vehicle (140); and
• starting up (S320) the vehicle (140) based on the second data (D2), wherein the starting up comprises at least one of starting up a data processing device of the vehicle (140), starting up a thermal management system of an energy storage of the vehicle (140), and adjusting at least one vehicle component in the cabin of the vehicle.

11. A data processing apparatus (130; 141) comprising means for carrying out the method of any of claims 1 to 9 and/or for carrying out the method of claim 10.

12. A system, comprising a first data processing apparatus (130) according to claim 11, wherein the first data processing apparatus (130) comprises means for carrying out the method of any of claims 1 to 9, and a second data processing apparatus (141) according to claim 11, wherein the second data processing apparatus (141) comprises means for carrying out the method of claim 10, and wherein the first data processing apparatus (130) and the second data processing apparatus (141) are communicatively coupled.

13. A computer program (135, 145) comprising instructions which, when the computer program is executed by a data processing apparatus (130, 141), cause the data processing apparatus (130, 141) to carry out the method of any of claims 1 to 9 and/or to carry out the method of claim 10.

14. A computer-readable storage medium (134, 144) comprising instructions which, when executed by a data processing apparatus (130, 141), cause the data processing apparatus (130, 141) to carry out the method of any of claims 1 to 9 and/or to carry out the method of claim 10.

15. A vehicle (140) comprising a data processing apparatus (130, 141) according to claim 11.
